# EUROPÄISCHE PATENTSCHRIFT

(11) **EP 3 439 117 B1**
(45) Veröffentlichungstag und Bekanntmachung des Hinweises auf die Patenterteilung: **29.07.2020**
(21) Anmeldenummer: 18186209.5
(22) Anmeldetag: 30.07.2018
(51) Int. Cl.: H01R 13/52

(54) **VERFAHREN ZUR ÜBERPRÜFUNG EINER ABDICHTUNG EINER STECKERVERBINDUNG SOWIE STECKERVERBINDUNG**
METHOD FOR CHECKING A SEAL OF A PLUG CONNECTION AND PLUG CONNECTION
PROCÉDÉ DE VÉRIFICATION D'UNE ÉTANCHÉITÉ D'UN RACCORD ENFICHABLE AINSI QUE RACCORD ENFICHABLE

(30) Priorität: 04.08.2017 DE 102017213592
(43) Veröffentlichungstag der Anmeldung: 06.02.2019
(73) Patentinhaber: LEONI Bordnetz-Systeme GmbH, 97318 Kitzingen (DE)
(72) Erfinder: STENZEL, Alexander, 91438 Bad Windsheim (DE)
(74) Vertreter: FDST Patentanwälte

(56) Entgegenhaltungen:
- DE-A1-102016 100 817
- DE-T5-112015 004 044
- DE-U1- 29 823 046
- JP-A- H06 223 917

## Beschreibung

Die Erfindung betrifft ein Verfahren zur Überprüfung einer Abdichtung einer Steckerverbindung mit den Merkmalen des Anspruchs 1 sowie eine Steckerverbindung mit den Merkmalen des Anspruchs 12.

Ein derartiges Verfahren sowie eine derartige Steckerverbindung sind aus der DE 298 23 046 U1 zu entnehmen.

Steckerverbindungen sind in nahezu allen elektrischen Versorgungsnetzen eingesetzt. Sie sind üblicherweise aus einem Steckerelement und einem Gegensteckerelement gebildet, die ineinander gesteckt sind und somit beispielweise zumindest zwei elektrische Leitungen oder eine elektrische Leitung mit einem Gehäuse einer elektrischen Komponente elektrisch miteinander verbinden.

Derartige Steckerverbindungen müssen häufig gegen Umwelteinflüsse abgedichtet sein. Insbesondere im Kraftfahrzeugbereich und dort speziell in sogenannten Nassräumen, wie beispielsweise im Motorraum, ist eine Dichtigkeit wesentlich. Diese trifft insbesondere auch für elektrische Versorgungsleitungen, insbesondere Hochvoltleitungen zu, die beispielsweise zur elektrischen Versorgung von elektrischen Antriebskomponenten, wie z.B. ein elektrischer Fahrmotor ausgebildet sind.

Um die Dichtigkeit zu gewährleisten ist teilweise eine Überprüfung der Abdichtung der die Steckerverbindung vorgesehen. Hierbei wird die Steckerverbindung mit einem Prüfmedium, beispielsweise Druckluft, beaufschlagt, indem das Prüfmedium über die an den jeweiligen Steckerelementen angeschlossenen Leitungen in einen zu prüfenden Innenraum der Steckerverbindung geleitet wird. Dieses Verfahren ist jedoch bei elektrischen Leitungen, die einen Mindestquerschnitt unterschreiten nur schwer bis nicht durchführbar.

Aus der DE 298 23 046 U1 ist eine Kontaktanordnung mit zwei ineinander steckbaren Bauteilen mit zwischen diesen angeordneten Dichtelementen zu entnehmen. Zur Überprüfung der Dichtigkeit der Dichtelemente weist das eine Bauteil eine Prüfbohrung auf, mittels der ein Hohlraum zwischen den Dichtelementen mit einem Prüfmedium zur Dichtigkeitsprüfung beaufschlagbar ist. Nach der Dichtigkeitsprüfung wird die Prüföffnung durch ein Verfüllen mit Klebstoff oder durch Einsetzen eines Dichtstopfens abgedichtet.

Die DE 11 2015 004 044 T5 befasst sich mit einem speziellen Abdichtteil für eine wasserdichte Abdichtung einer Steckverbindung. Zur Prüfung der Dichtigkeit wird in einem Dichtigkeitstest die ausgebildete Steckverbindung in ein Wasserbad getaucht und über eine Leitung wird die Steckverbindung mit Druckluft beaufschlagt.

Die JP H06 223 917 A beschreibt eine Steckeranordnung, bei der über eine Öffnung und über einen an die Öffnung angeschlossenen Schlauch ein Innenraum auf Dichtigkeit hin überprüfbar ist.

Ausgehend hiervon liegt der Erfindung die Aufgabe zugrunde ein Verfahren sowie eine Steckerverbindung anzugeben, so dass eine einfache Überprüfung der Abdichtung der Steckerverbindung ermöglicht ist.

Die Aufgabe wird erfindungsgemäß gelöst durch ein Verfahren zur Überprüfung einer Abdichtung einer Steckerverbindung mit den Merkmalen des Anspruchs 1.

Vorteilhafte Ausgestaltungen, Weiterbildungen und Varianten sind Gegenstand der Unteransprüche.

Das beschriebene Verfahren ist zur Überprüfung einer Abdichtung eines zu prüfenden Innenraums einer Steckerverbindung ausgebildet. Unter Steckerverbindung wird allgemein eine insbesondere reversible beispielsweise elektrische Verbindung zwischen zwei Steckverbindungselementen, nämlich einem Steckerelement und einem Gegensteckerelement verstanden. Über die Steckerverbindung ist dabei zumindest eine elektrische Leitung mit einer weiteren elektrischen Komponente verbunden. Bei der weiteren Komponente handelt es sich vorzugsweise um eine weitere Leitung. Innerhalb des Steckerelements sind Steckerkontakte angeordnet, die mit im Gegensteckerelement angeordneten Gegensteckerkontakten korrespondieren und im gesteckten Zustand eine elektrische Verbindung herstellen.

Sowohl das Steckerelement als auch das Gegensteckerelement weisen ein Gehäuse auf. Die Gehäuse werden zur Ausbildung der Steckerverbindung üblicherweise formschlüssig in einer Steckrichtung ineinander gesteckt. Die Kontaktelemente der beiden Gehäuse liegen im gesteckten Zustand innerhalb eines Innenraums der Steckerverbindung ein. Dieser Innenraum muss nach außen z.B. gegen Feuchtigkeit abgedichtet sein und bilden einen auf Dichtheit zu überprüfenden Innenraum. Dieser zu prüfende Innenraum wird typischerweise jeweils durch einen Teil des Gehäuses des Steckerelements und durch einen Teil des Gehäuses des Gegensteckerelements ausgebildet.

Die anzuschließende bzw. die zu verbindende elektrische Leitung wird abgedichtet in das Gehäuse des Steckerelements eingeführt.

Zur Prüfung der Abdichtung des Innenraumes, weist eines der Steckverbindungselemente eine Prüföffnung, beispielsweise nach Art einer Bohrung auf. Durch die Prüföffnung wird der zu prüfende Innenraum mit einem Prüfmedium beaufschlagt. Hierbei wird auf eine einfache Weise überprüft, ob aus oder an einer Stelle des zu prüfenden Innenraums und insbesondere an einer Abdichtung zwischen den Gehäusen der Steckerelemente oder an den Durchführungen der elektrischen Leitungen in das Innere der Steckerelemente das Prüfmedium heraustritt und somit eine Undichtigkeit kenntlich macht. Insbesondere ist das Prüfmedium druckbeaufschlagt, um die Abdichtung hinreichend zu prüfen.

Nach der Überprüfung wird die Prüföffnung zum Innenraum hin abgedichtet, um ein Eintreten von beispielsweise Feuchtigkeit durch die Prüföffnung in den Innenraum zu verhindern und somit folglich eine vollständige Abdichtung des Innenraums zu erreichen. Nach der Prüfung ist der Innenraum daher zuverlässig abgedichtet.

Eine derartige Überprüfung ermöglicht es auf eine einfache Weise und kostengünstig eine Steckerverbindung hinsichtlich ihrer Abdichtung zu überprüfen. Insbesondere ist die Überprüfung unabhängig eines Leiterquerschnittes der Aderleitungen, welche mittels der Steckerverbindungen verbunden werden.

Von besonderer Bedeutung hierbei ist, dass bewusst eine Prüföffnung in zumindest ein Gehäuseteil der Steckerverbindung eingebracht ist, über die das Prüfmedium eingebracht werden kann und dass zugleich eine Vorkehrung getroffen wird, dass die Prüföffnung im normalen Betrieb keine Undichtigkeitstelle bildet.

Zur Abdichtung der Prüföffnung zum Innenraum hin wird ein Abdichtelement in Steckrichtung über die Prüföffnung hinaus in eine Dichtstellung verschoben. Unter der Dichtstellung wird hierbei eine speziell eine Stellung des Abdichtelements verstanden, in der das Abdichtelement vorzugsweise zwischen dem zu prüfenden Innenraum und der Prüföffnung angeordnet ist. Hierdurch wird eine zuvor bestehende Strömungsverbindung, über die der Innenraum bevorzugt mit dem Prüfmedium beaufschlagt wird, zwischen der Prüföffnung und dem Innenraum unterbunden.

Vorzugsweise weist die Steckerverbindung ein Bauteil auf, welches bei der Konfektionierung der Steckerverbindung in Steckrichtung verschoben wird, wobei das Abdichtelement dabei automatisch zusammen mit dem Bauteil verschoben wird. Hierdurch ist die Verschiebung des Abdichtelements in die Dichtstellung und somit eine Abdichtung des Innenraums sichergestellt. Das Bauteil ist hierbei derart ausgebildet, dass es beispielsweise entweder Mittel aufweist, mit denen das Abdichtelement verschoben wird, oder das Bauteil ist derart ausgebildet, dass das Abdichtelement an dem Bauteil angeordnet ist.

Gemäß einer ersten Ausgestaltungsvariante weist das Steckerelement die Prüföffnung auf. Zur Überprüfung des Innenraums wird das Steckerelement vorzugsweise zunächst in eine Prüfstellung in das Gegensteckerelement gesteckt. Anschließend an die Überprüfung wird das Steckerelement in eine endkonfektionierte Stellung in das Gegensteckerelement überführt, um die Prüföffnung zum Innenraum hin abzudichten. In der Prüfstellung ist somit die Steckerverbindung noch nicht endgültig ausgebildet. Bei dieser handelt es sich daher um eine Zwischenstellung. Durch weiteres Ineinanderstecken der beiden Steckverbindungselemente wird schließlich die endkonfektionierte Stellung erreicht. Zur Abdichtung der Prüföffnung zum zu prüfenden Innenraum hin ist daher vorzugsweise ausschließlich ein weiteres Verschieben der beiden Steckverbindungsemente ineinander erforderlich.

Zur Ausbildung der Prüfstellung wird das Steckerelement bevorzugt in Steckrichtung beispielsweise um die Hälfte seiner Länge in das Gegensteckerelement gesteckt. Aufgrund der vorzugsweise formschlüssigen Ausgestaltung zwischen Steckerelement und Gegensteckerelement ist bereits in der Prüfstellung der zu prüfende Innenraum ausgebildet.

Der Vorteil dieser Ausgestaltung ist, dass die Überprüfung der Abdichtung beispielsweise im Rahmen einer Fertigung der Steckerverbindung erfolgt. Nach einer erfolgreichen Prüfung wird dann durch ein Ineinanderstecken des Steckerelements in das Gegensteckerelement die gewünschte Steckerverbindung ausgebildet. Überprüfung und Ausbildung der Steckerverbindung erfolgen somit nahezu in einem Fertigungsschritt. Es wird kein gesonderter, aufwändiger Produktionsschritt zur Überprüfung der Abdichtung benötigt.

Zur Abdichtung des Innenraums entlang des Formschlusses der Steckergehäuse, ist das Abdichtelement bevorzugt zwischen dem Steckerelement und dem Gegensteckerelement angeordnet, sodass der Innenraum durch das Abdichtelement abgedichtet wird Hierzu schiebt sich der Teil des Steckverbindungselements, in den die Prüföffnung eingelassen ist - in Steckrichtung betrachtet - bei Verschieben in die Endstellung hinter das Abdichtelement. Somit steht die Prüföffnung in der Endstellung nicht mehr mit dem Innenraum "in Verbindung", wodurch zugleich eine vollständige Abdichtung des Innenraums erreicht wird.Somit handelt es sich bei dem Bauteil, mit dem das Abdichtelement verschoben wird, vorzugsweise um eines der Steckverbindungselemente. Insbesondere handelt es sich bei dem Bauteil um das Gegensteckerelement, welches im endkonfektionierten Zustand das Steckerelement "umgreift". Das Abdichtelement ist weiterhin insbesondere am Gegensteckerelement kraftschlüssig angeordnet, beispielsweise geklebt.

Zweckdienlicherweise ist das Steckerelement zur Ausbildung der Steckerverbindung von dem Gegensteckerelement in der Prüfstellung teilweise und in der Endstellung vorzugsweise vollständig umgeben. Das Abdichtelement ist hierbei als eine Ringdichtung ausgebildet. Der Vorteil dieser Ausgestaltung ist in der einfachen und vollständigen Abdichtung des Innenraums der Steckerverbindung zu sehen.

Zur Fixierung der Steckerverbindung weist das Steckerelement gemäß einer bevorzugten Ausgestaltung eine Rastnase auf. Zudem weist das Gegensteckerelement eine mit der Rastnase korrespondierende Rastaussparung auf, sodass in der endkonfektionierten Stellung die Rastnase in der Rastaussparung verrastet.

Hierdurch ist eine einfache Fixierung der Steckerverbindung erreicht. Unter Fixierung wird vorliegend verstanden, dass die Steckerverbindung beispielsweise gegen Zugkräfte gesichert ist, die entgegen der Steckrichtung wirken und ein Lösen der Steckerverbindung zur Folge haben. Weiterhin ist ein "Herausfallen" des Steckerelements aus dem Gegensteckerelement verhindert. Die Fixierung ist vorzugsweise irreversibel, d.h. die Steckerverbindung ist nach der Fixierung nicht mehr (zerstörungsfrei) lösbar. Alternativ ist die Fixierung reversibel.

Zweckdienlicherweise ist die Prüföffnung in Steckrichtung betrachtet hinter der Rastnase an dem Steckerelement angeordnet. Hierdurch ist erreicht, dass bei in der Prüfstellung positioniertem Steckerelement die Rastaussparung "über" der Prüföffnung positioniert ist. Unter über der Prüföffnung wird vorliegend verstanden, dass das Gegensteckerelement in der der Prüfstellung derart das Steckerelement umgibt, dass sich die Rastaussparung des Gegensteckerelements über die Prüföffnung des Steckerelements schiebt und diese somit zugänglich macht. Hierdurch ist weiterhin erreicht, dass die Prüföffnung lediglich in der Prüfstellung zugänglich ist.

Gemäß einer zweiten Ausgestaltungsvariante weist das Steckverbindungselement, in welchem die Prüföffnung angeordnet ist, einen Anschlussstutzen mit einer Durchführung auf. Durch die Durchführung ist in einem konfektionierten Zustand eine Leitung in den Innenraum eingeführt. Die Prüföffnung ist gemäß der zweiten Ausgestaltung im Anschlussstutzen ausgebildet. Der Vorteil dieser Ausgestaltungsvariante ist, dass sich die beiden Steckverbindungselemente - im Gegensatz zu der ersten Ausgestaltungsvariante - bereits vor oder bei der Dichtigkeitsprüfung in der endkonfektionierten Stellung befinden können. Mit anderen Worten ist die Prüföffnung trotz ineinandergesteckten Steckverbindungselementen für eine Dichtigkeitsprüfung des Innenraumes zugänglich. Der (zu prüfende) (Gesamt-)Innenraum wird hierbei durch einen jeweiligen Innenraum des Anschlussstutzens und den Teil des (Gesamt-)Innenraums gebildet, in dem die Leitungen elektrisch verbunden sind.

Bevorzugt ist weiterhin gemäß der zweiten Ausgestaltungsvariante das Abdichtelement zwischen dem Anschlussstutzen und der Leitung angeordnet. Das Abdichtelement wird weiterhin zur Ausbildung der endkonfektionierten Stellung - in Steckrichtung betrachtet - über die Prüföffnung hinaus verschoben. Hierdurch ist eine zuverlässige Abdichtung des Innenraums ermöglicht, da das Abdichtelement in der endkonfektionierten Stellung örtlich zwischen dem Innenraum und der Prüföffnung angeordnet ist.

Die Steckerverbindung weist weiterhin ein vorzugsweise als Haltkappe ausgebildetes Halteelement auf, welches auf den Anschlussstutzen - in Steckrichtung - aufgeschoben wird. Beim Aufschieben verschiebt das Halteelement zudem das Abdichtelement automatisch mit. Hierzu ist das Halteelement bevorzugt nach Art einer "Doppelhülse" ausgebildet. D.h. das Halteelement weist eine innere Hülse und eine die innere Hülse konzentrisch unter Ausbildung eines Spalts umgebende äußere Hülse auf. An einer Stirnseite des Halteelements, speziell an der - in Steckrichtung betrachtet - von dem Anschlussstutzen abgewandten Stirnseite, sind die beiden Hülsen miteinander verbunden. Die innere Hülse dient als eine Art Anschlag zum Verschieben des Abdichtelements. In einem aufgeschobenen Zustand des Halteelements auf dem Anschlussstutzen, umgeben die innere Hülse und die äußere Hülse eine Wandung des Anschlussstutzens. Mit anderen Worten verfährt die Wandung des Anschlussstutzens beim Aufschieben aus der Prüfstellung in die enkonfektionierte Stellung in den zwischen der inneren Hülse und der äußeren Hülse ausgebildeten Spalt. Im aufgeschobenen Zustand, also im endkonfektionierten Zustand verdeckt die innere Hülse die Prüföffnung "von innen".

Unter der Prüfstellung wird hierbei verstanden, dass sich das Halteelement in Steckrichtung betrachtet (lediglich auf die Leitung aufgeschoben) in einer Vormontagestellung auf oder vor dem jeweiligen Anschlussstutzen befindet, in dem die Prüföffnung angeordnet ist. Das Abdichtelement ist hierbei lediglich so weit in den Anschlusstutzen hinein geschoben, dass es die für die Prüfung benötigte Abdichtung gewährleistet, jedoch nicht die Prüföffnung verschließt.

Das Abdichtelement liegt in der endkonfektionierten Stellung speziell formschlüssig und abdichtend mit seiner radialen Außenseite an einer radialen Innenseite des jeweiligen Stutzens an. An einer radialen Innenseite des Dichtelements liegt dieses formschlüssig und abdichtend an einem Außenmantel der jeweiligen Leitung an.

Bevorzugt weisen sowohl der Anschlussstutzen als auch das Halteelement eine gleiche Form, beispielsweise eine runde Form auf. Das Halteelement dient einer Fixierung und Zentrierung der Leitung innerhalb des Anschlussstutzens und weist vorzugsweise ein Rastelement, beispielsweise eine Rastnase oder eine Rastaussparung auf. Zudem schützt der Anschlusstutzen das Abdichtelement in der endkonfektionierten Stellung vor äußeren Einflüssen, wie beispielsweise Spritzwasser. Der Anschlussstutzen weist eine zum Rastelement des Halteelements korrespondierend ausgebildetes Gegenrastelement, beispielsweise auch entweder eine Rastnase oder eine Rastaussparung, auf.

Gemäß einer bevorzugten Ausgestaltung ist das Prüfmedium Druckluft. Der Vorteil von Druckluft als Prüfmedium ist, dass hierdurch ein günstiges, einfaches und insbesondere im Hinblick auf die elektrischen Aderleitungen ein elektrisch verträgliches Prüfmedium herangezogen wird. Unter elektrisch verträglich wird vorliegend verstanden, dass das Prüfmedium vorzugsweise elektrisch nicht leitend ist.

Die Aufgabe wird erfindungsgemäß weiterhin gelöst durch eine Steckervorrichtung mit den Merkmalen des Anspruchs 12. Die Steckervorrichtung ist insbesondere zur Durchführung des zuvor beschriebenen Verfahrens ausgebildet. Speziell handelt es sich bei der Steckervorrichtung um die bereits im Rahmen des Verfahrens beschriebene Steckerverbindung.

Die Steckervorrichtung weist somit zwei Steckverbindungselemente, nämlich ein Steckerelement und ein Gegensteckerelement auf. Das Steckerelement und das Gegensteckerelement sind in einer Steckrichtung ineinander steckbar. Eines der beiden Steckverbindungselemente weist eine Prüföffnung auf.

In einer Prüfstellung der Steckervorrichtung ist die Prüföffnung zugänglich und es besteht eine Strömungsverbindung zwischen der Prüföffnung und einem zu prüfenden Innenraum, sodass der Innenraum durch die Prüföffnung mit einem Prüfmedium, beispielsweise Druckluft beaufschlagbar ist.

In einer endkonfektionierten Stellung ist die Strömungsverbindung unterbrochen.

Die Prüföffnung dient einer Überprüfung einer Abdichtung des zu prüfenden Innenraums, der im zusammengesteckten Zustand durch das Steckerelement und das Gegensteckerelement ausgebildet ist.

Weiterhin weist die Steckervorrichtung ein Abdichtelement auf, welches - in Steckrichtung betrachtet - in der Prüfstellung vor der Prüföffnung und in der endkonfektionierten Stellung nach der Prüföffnung angeordnet ist. In der endkonfektionierten Stellung ist somit eine zuverlässige Abdichtung des zu prüfenden Innenraums sichergestellt, da das Abdichtelement örtlich zwischen dem Innenraum und der Prüföffnung angeordnet ist und Medien, beispielsweise Feuchtigkeit oder Flüssigkeiten nicht über die Prüföffnung in den Innenraum gelangen können. Vielmehr werden derartige Medien von dem Abdichtelement "zurückgehalten".

Weiterhin ist die Steckervorrichtung, insbesondere das Steckerelement und das Gegensteckerelement zu einem Verbinden von Hochvoltleitungen ausgebildet. An zumindest einem der beiden Elemente der Steckervorrichtung ist daher eine Hochvoltleitung angeschlossen. Unter Hochvoltleitungen werden insbesondere elektrische Versorgungsleitungen verstanden, die zur elektrischen Leistungsversorgung von Hochvoltkomponenten speziell eine elektrischen Fahrantriebs im Kraftfahrzeugbereich eingesetzt werden. Unter Hochvolt werden hierbei typischerweise einige hundert Volt, z.B. 300-600V verstanden.

Die im Hinblick auf das Verfahren aufgeführten Vorteile und bevorzugten Ausgestaltungen sind sinngemäß auf die Steckervorrichtung zu übertragen du umgekehrt.

Ausführungsbeispiele der Erfindung werden nachfolgen anhand der Figuren näher erläutert. Diese zeigen teilweise in stark vereinfachten Darstellungen:
- Fig.1: eine perspektivische Ansicht einer Steckerverbindung gemäß einer ersten Ausgestaltungsvariante in einer Prüfstellung,
- Fig. 2: eine Längsschnittdarstellung der Steckerverbindung gemäß der ersten Ausgestaltungsvariante in einer Prüfstellung,
- Fig. 3: eine Längsschnittdarstellung der Steckerverbindung gemäß der ersten Ausgestaltungsvariante in einer Endstellung sowie
- Fig. 4: eine perspektivische Ansicht einer Steckerverbindung gemäß einer zweiten Ausgestaltungsvariante.

In den Figuren sind gleichwirkende Teile mit den gleichen Bezugszeichen dargestellt.

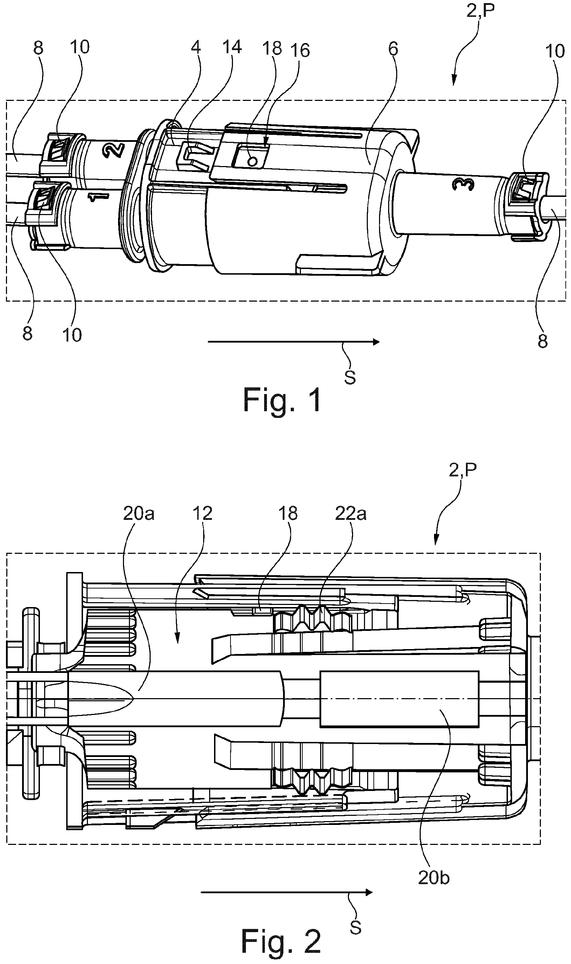

In Fig.1 ist eine Steckerverbindung 2 aus zwei Steckverbindungselementen, nämlich einem Steckerelement 4 und einem Gegensteckerelement 6 gemäß einer ersten Ausgestaltungsvariante dargestellt. Die Steckerverbindung 2 dient einer reversiblen elektrischen Verbindung elektrischer Leitungen 8, im Ausführungsbeispiel einer Verbindung von Hochvoltleitungen für den Kraftfahrzeugbereich.

Im Ausführungsbeispiel ist die Steckerverbindung 2 nach Art eines insbesondere y-förmigen (Leistungs-)Verteilers mit einer eingehenden Leitung 8 und zwei abgehenden Leitungen 8 ausgebildet.

Die Leitungen 8 sind mittels Durchführungen 10 in einen Innenraum 12 (vgl. Fig. 2) geführt. Die Durchführungen 10 sind zum Innenraum 12 hin abgedichtet, sodass eine Längswasserdichtigkeit ausgebildet ist. Der Innenraum 12 ist aus einem Teil des Steckerelements 4 und einem Teil des Gegensteckerelements 6 gebildet. Sowohl das Steckerelement 4 als auch das Gegensteckerelement 6 weisen jeweils Steckergehäuse auf, die im gesteckten Zustand ineinander gesteckt sind. Die Steckergehäuse sind beispielsweise aus einem elektrisch isolierenden Kunststoff oder alternativ auch aus einem leitfähigen Material, insbesondere Metall. Zur Ausbildung der Steckerverbindung ist das Steckerelement 4 in eine Steckrichtung S in das Gegensteckerelement 6 steckbar. Hierbei umgibt das Gegensteckerelement 6 das Steckerelement 4 im Ausführungsbeispiel formschlüssig.

Zur Ausbildung der vorzugsweise reversiblen Verbindung der Steckerverbindung 2 weist das Steckerelement 4 weiterhin im Ausführungsbeispiel eine Rastnase 14 auf, die mit einer im Gegensteckerelement 6 eingelassenen Rastaussparung 16 verrastet.

Zu einer Überprüfung einer zuverlässigen Abdichtung des Innenraums 12 weist das Steckerelement 4 eine Prüföffnung 18 auf. Die Anordnung der Prüföffnung 18 ist im Ausführungsbeispiel derart gewählt, dass die Prüföffnung 18 lediglich in einer Prüfstellung P den Innenraum 12 zu einer Überprüfung zugänglich macht. Hierzu ist die Prüföffnung 18 in Steckrichtung S betrachtet hinter der Rastnase 14 angeordnet. Unter Prüfstellung P wird vorliegend eine Stellung der Steckerverbindung 2 verstanden, bei der das Steckerelement 4 nicht vollständig in das Gegensteckerelement 6 eingesteckt ist. Beispielsweise ist das Steckerelement 4 in der Prüfstellung P im Ausführungsbeispiel zur Hälfte in das Gegensteckerelement 6 eingesteckt.

Die Rastaussparung 16 ist hierbei über der Prüföffnung 18 angeordnet, sodass diese zugänglich ist.

Zur Überprüfung der Abdichtung des Innenraums 12 wird dieser mit einem Prüfmedium beaufschlagt. Vorzugsweise ist das Prüfmedium Druckluft. Das Prüfmedium wird hierbei durch die Prüföffnung 18 in den Innenraum geleitet. Bei einer möglichen Undichtigkeitsstelle tritt das Prüfmedium aus dem Innenraum 12 heraus, wodurch eine einfache Detektion möglicher Undichtigkeitsstellen erreicht ist.

In Fig. 2 ist eine Längsschnittdarstellung einer Steckerverbindung 2 mit sich in der Prüfstellung P positioniertem Steckerelement 4 und Gegensteckerelement 6 dargestellt.

Weiterhin weist das Steckerelement 4 im Ausführungsbeispiel einen Steckkontakt 20a auf und das Gegensteckerelement 6 einen Gegensteckerkontakt 20b auf. Der Steckerkontakt 20a und der Gegensteckerkontakt 20b dienen der elektrischen Verbindung der Leitungen 8. Sowohl der Steckerkontakt 20a als auch der Gegensteckerkontakt 20b sind in dem Innenraum 12 der Steckerverbindung 2 angeordnet.

Weiterhin weist die Steckerverbindung 2 ein Abdichtelement 22a auf, welches im Ausführungsbeispiel als eine Ringdichtung ausgebildet ist und den Innenraum somit umfangseitig umgibt. Das Abdichtelement 22a dient einer zusätzlichen Abdichtung des Innenraums 12. In Steckrichtung S betrachtet dichtet das Abdichtelement 22a den Innenraum 12 hinter der Prüföffnung 18 ab, sodass während der Überprüfung das Prüfmedium dort nicht entweicht. Somit ist der Innenraum 12 sowohl durch die Abdichtungen der Durchführungen 10 als auch durch das Abdichtelement 22a abgedichtet, sodass beispielsweis keine Feuchtigkeit in den Innenraum 12 gelangt.

In der Prüfstellung P ist die Prüföffnung 18 somit - in Steckrichtung betrachtet - vor dem Abdichtelement 22a positioniert und ermöglicht hierdurch einen Zugang zu dem Innenraum 12 für das Prüfmedium.

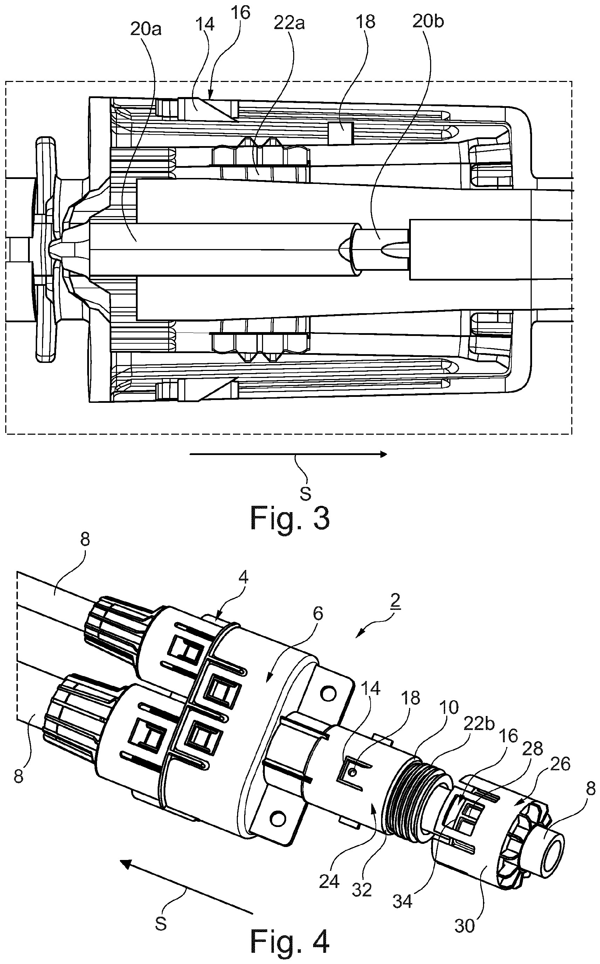

In Fig. 3 ist eine Längsschnittdarstellung einer Steckerverbindung 2 in einer Endstellung E dargestellt. Unter Endstellung E wird vorliegend eine Position der Steckerverbindung verstanden, bei der das Steckerelement 4 vollständig in das Gegensteckerelement 6 eingesteckt ist. Die Steckerverbindung ist hierdurch vollständig ausgebildet. Um zu verhindern, dass sich die Steckerverbindung 2 versehentlich löst, ist die Rastnase 14 in der Endstellung S in der Rastaussparung 16 verrastet.

Die Prüföffnung 18 ist in der Endstellung E - in Steckrichtung S betrachtet - hinter dem Abdichtelement 22a angeordnet. Hierdurch ist ein Eindringen von Feuchtigkeit in den Innenraum 12 durch die Prüföffnung 18 in der Endstellung E verhindert. D.h. das Abdichtelement 22a ist in einem Zwischenbereich zwischen dem Innenraum 12 und der Prüföffnung 18 angeordnet und dichtet somit den Innenraum 12 zur Prüföffnung 18 ab, beispielsweise gegenüber einem unerwünschten Feuchtigkeitseintritt durch die Prüföffnung 18.

Mit andere Worten: Beim Zusammenstecken der Steckerverbindung 2 (beim Überführen des Steckerelements 4 in Steckrichtung S von der Prüfposition P in die Endstellung E nach einer Überprüfung der Abdichtung des Innenraums 12) verschiebt sich die Prüföffnung 12 über das Abdichtelement 22a hinweg, bis - in der Endstellung E - die Prüföffnung 18 hinter dem Abdichtelement 22a innerhalb der Steckerverbindung 2 verortet ist. Durch ein einfaches Verschieben der beiden Steckverbinderelemente wird daher automatisch die strömungstechnische Verbindung zwischen der Prüföffnung (12) und dem Innenraum (12) aufgehoben und durch das Abdichtelement (22) zuverlässig abgedichtet.

Alternativ zu dieser bevorzugten Ausgestaltung können auch andere Maßnahmen zum Abdichten der Prüföffnung, beispielsweise ein Vergießen oder ein sonstiges Verschließen z.B. mit einem Dichtstopfen vorgesehen sein.

In Fig. 4 ist eine zweite Ausgestaltungsvariante der Steckervorbindung 2 gezeigt. Die Steckerverbindung 2 ist hierbei ebenfalls als ein Hochvolt-Verteiler ausgebildet.

Die Steckerverbindung 2 weist zwei Steckverbindungselemente auf, nämlich ein Steckerelement 4 und ein Gegensteckerelement 6.

Im Ausführungsbeispiel weist das Gegensteckerelement 6 einen Anschlussstutzen 24 auf. Der Anschlussstutzen 24 dient einem Anschluss einer Leitung 8 an das Gegensteckerelement 6. Hierzu weist das Gegensteckerelement 6 und insbesondere der Anschlussstutzen 24 eine Durchführung 10 auf, in die die Leitung 8 eingebracht ist und in einen Innenraum 12 geführt ist.

Zusätzlich ist im Anschlussstutzen 24 eine Prüföffnung 18 ausgebildet, über die eine Dichtigkeitsprüfung des Innenraums 12 ermöglicht ist. Die Prüföffnung 18 gewährt also einen Zugang zu dem Innenraum 12. Hierbei ist ein Inneres des Anschlusssstutzens 24 Teil des Innenraums 12.

Um die Leitung 8 innerhalb des Gegensteckerelements 6 und speziell innerhalb der Durchführung 10 des Anschlussstutzens 24 zu fixieren, ist weiterhin ein Halteelement 26 vorgesehen, welches, beispielsweise im Rahmen einer Vorkonfektionierung der Leitung 8 auf diese geschoben wird. Das Halteelement 26 ist nach Art einer Hülse, insbesondere nach Art einer "Doppelhülse" ausgebildet. D.h. das Halteelement 26 weist eine innere Hülse 28 sowie eine diese unter Ausbildung eines Spalts konzentrisch umgebene äußere Hülse 30 auf. An der äußeren Hülse 30 ist weiterhin ein Rastelement, im Ausführungsbeispiel eine Rastaussparung 16 angeordnet. In einer Steckrichtung S betrachtet zwischem dem Halteelement 26 und dem Anschlussstutzen 24 ist ein weiteres Abdichtelement 22b angeordnet, insbesondere auf die Leitung 8 aufgeschoben. Das weitere Abdichtelement 22b ist hierbei als eine Ringdichtung ausgebildet. Es unterscheidet sich vom Abdichtelement 22a gemäß der ersten Ausgestaltungsvariante.

Grundsätzlich weist die Steckerverbindung 2 vorzugsweise in beiden Ausführungsvarianten jeweils ein (erstes) Dichtelement 22a zwischen den Gehäuseteilen des Steckerelements 4 und des Gegensteckerelements 6 sowie mehrere weitere (zweite) Abdichtelemente 22b zwischen einer jeweiligen Leitung 8 und einem jeweiligen Anschlussstutzen 24 auf. Gemäß der zweiten Ausgestaltungsvariante mit vier Anschlussstutzen 24 sind somit vierAbdichtelemente 22 vorgesehen, nämlich in jedem der einzelnen Anschlussstutzen ein Abdichtelement 22b und ein Abdichtelement 22a welches die Steckerverbindung 2 zwischen den Steckverbindungselementen abdichtet (vgl. Fig. 2+3).

Zur Durchführung einer Dichtigkeitsprüfung des Innenraums ist eine Prüfstellung P vorgesehen. In dieser Prüfstellung P ist das Abdichtelement 22b und das Halteelement 26 nicht vollständig an dem Anschlussstutzen 24 angeordnet. Hierdurch ist ein Zugang durch die Prüföffnung 18 zum Innenraum 12 und somit eine Beaufschlagung dessen mittels eines Prüfmediums ermöglicht und zum anderen ist der Innenraum 12 durch das nicht vollständig an dem Anschlussstutzen 24 angeordneten Abdichtelements 22b für die Prüfung abgedichtet.

Anschließend an eine Dichtigkeitsprüfung - zur Ausbildung einer endkonfektionierten Stellung E - wird das Halteelement 26 weiter in Steckrichtung S auf den Anschlussstutzen 24 geschoben, sodass eine Wandung 32 des Anschlussstutzens 24 in der endkonfektionierten Stellung zwischen der inneren Hülse 28 und der äußeren Hülse 30 des Halteelements 26 angeordnet ist. Um eine Auszugssicherheit, insbesondere entgegen der Steckrichtung S sicherzustellen, weist der Anschlussstutzen 24 ein Rastelement, im Ausführungsbeispiel eine zur Rastaussparung 16 des Halteelements 26 korrespondierend ausgebildete Rastnase 14 auf. In der endkonfektionierten Stellung E sind die beiden Rastelemente 14,16 verrastet und sichern so das Halteelement 26 und dadurch auch die Leitung 8 vor einer Längsverschiebung, insbesondere entgegen der Steckrichtung S.

Beim Verschieben des Halteelements 26 in Steckrichtung S verschiebt das Halteelement 26, speziell eine Stirnfläche 34 der inneren Hülse 28 das Abdichtelement 22b ebenfalls in Steckrichtung S in den Anschlussstutzen 24. Das Abdichtelement 22b ist so dimensioniert, dass es eine zuverlässige Abdichung zwischen dem Anschlusssutzen 24 und der Leitung ausbildet. Je nach Material und Elastizität des Abdichtelements 22 entspricht der Außendurchmesser des Abdichtelements 22b mindestens dem Innendurchmesser des Anschlussstutzens 24.

In der endkonfektionierten Stellung E ist das Abdichtelement 22b in Steckrichtung S betrachtet über die Prüföffnung 18 hinaus verschoben. Mit anderen Worten ist das Abdichtelement 22b in Steckrichtung S betrachtet zwischen dem Innenraum 12 und der Prüföffnung 18 angeordnet und dichtet somit den Innenraum 12 zuverlässig ab. Hierdurch ist eine Abichtung des Innenraums 12 und somit eines sicherheitsrelevanten Teils der Steckerverbindung 2 trotz einer - von außen - nicht verschließbaren Prüföffnung 18 erreicht. Auf ein Verschließen der Prüföffnung 18 kann aufgrund der Anordnung des Abdichtelements 22b im Anschlussstutzens 24 verzichtet werden.

### Bezugszeichenliste

- 2: Steckerverbindung
- 4: Steckerelement
- 6: Gegensteckerelement
- 8: elektrische Leitung
- 10: Durchführung
- 12: Innenraum
- 14: Rastnase
- 16: Rastaussparung
- 18: Prüföffnung
- 20a: Steckerkontakt des Steckerelements
- 20b: Steckerkontakt des Gegensteckerelements
- 22a,b: Abdichtelement
- 24: Anschlussstutzen
- 26: Halteelement
- 28: innere Hülse
- 30: äußere Hülse
- 32: Wandung
- 34: Stirnfläche

- E: endkonfektionierte Stellung
- P: Prüfstellung
- S: Steckrichtung

## Patentansprüche

1. Verfahren zur Überprüfung einer Abdichtung eines zu prüfenden Innenraums (12) einer Steckerverbindung (2), welche zwei Steckverbindungselemente aufweist, nämlich ein Steckerelement (4) und ein Gegensteckerelement (6), die in einer Steckrichtung (S) ineinander gesteckt werden, wobei eines der Steckverbindungselemente (4,6) eine Prüföffnung (18) zum Innenraum (12) aufweist, über die der Innenraum (12) zur Überprüfung der Abdichtung mit einem Prüfmedium beaufschlagt wird und anschließend die Prüföffnung (18) zum Innenraum (12) hin abgedichtet wird,**dadurch gekennzeichnet, dass** ein Abdichtelement (22) angeordnet ist, welches - in Steckrichtung (S) betrachtet - in einer Prüfstellung (P) vor der Prüföffnung (18) und in einer endkonfektionierten Stellung (E) nach der Prüföffnung (18) angeordnet ist und wobei zur Abdichtung der Prüföffnung (18) zum Innenraum (12) das Abdichtelement (22a,b) in Steckrichtung (S) aus der Prüfstellung (P) über die Prüföffnung (18) hinaus in eine Dichtstellung in die endkonfektionierten Stellung (E) verschoben wird, so dass eine zuvor bestehende Strömungsverbindung zwischen Prüföffnung (18) und Innenraum (12) durch das Abdichtelement (22a,b) unterbunden ist, wobei das Abdichtelement (22a) in der Prüfstellung (P) den Innenraum (12) hinter der Prüföffnung (18) abdichtet und in der endkonfektionierten Stellung (E) den Innenraum zur Prüföffnung (18) abdichtet.

2. Verfahren nach dem vorhergehenden Anspruch, wobei
die Steckerverbindung (2) ein Bauteil aufweist, welches bei der Konfektionierung der Steckerverbindung (2) in Steckrichtung (S) verschoben wird, wobei das Abdichtelement (22a,b) automatisch zusammen mit dem Bauteil verschoben wird.

3. Verfahren nach einem der vorhergehenden Ansprüche,
wobei das Steckerelement (4) die Prüföffnung (18) aufweist und zur Überprüfung des Innenraums (12) in die Prüfstellung (P) in das Gegensteckerelement (6) gesteckt wird und anschließend zur Abdichtung der Prüföffnung (18) in die endkonfektionierte Stellung (E) überführt wird.

4. Verfahren nach dem vorhergehenden Anspruch ,
wobei zwischen dem Steckerelement (4) und dem Gegensteckerelement (6) das Abdichtelement (22a) angeordnet ist, sodass der Innenraum (12) durch das Abdichtelement (22a) abgedichtet wird.

5. Verfahren nach einem der vorhergehenden Ansprüche,
wobei zur Ausbildung der Steckerverbindung (2) das Steckerelement (4) von dem Gegensteckerelement (6) umgeben ist und das Abdichtelement (22b) als eine Ringdichtung ausgebildet ist.

6. Verfahren nach einem der vorhergehenden Ansprüche,
wobei das Steckerelement (4) eine Rastnase (14) aufweist und das Gegensteckerelement (6) eine Rastaussparung (16) aufweist, sodass in der endkonfektionierten Stellung (E) die Rastnase (14) in der Rastaussparung (16) verrastet.

7. Verfahren nach dem vorhergehenden Anspruch,
wobei die Prüföffnung (18) in Steckrichtung (S) betrachtet hinter der Rastnase (14) angeordnet ist, sodass die Rastaussparung (16) in der Prüfstellung (P) über der Prüföffnung (18) angeordnet ist.

8. Verfahren nach einem der Ansprüche 1 bis 2,
wobei das Steckverbindungselement mit der Prüföffnung (18) einen Anschlussstutzen (24) mit einer Durchführung (10) aufweist, durch die in einem konfektionierten Zustand eine Leitung (8) in den Innenraum (12) eingeführt ist, und wobei die Prüföffnung (18) im Anschlussstutzen (24) ausgebildet ist.

9. Verfahren nach dem vorhergehenden Anspruch,
wobei das Abdichtelement (22b) zwischen dem Anschlussstutzen (24) und der Leitung (8) angeordnet ist und über die Prüföffnung (18) hinaus verschoben wird.

10. Verfahren nach dem vorhergehenden Anspruch, wobei
die Steckerverbindung (2) weiterhin ein Halteelement (26) aufweist, welches auf den Anschlussstutzen (24) aufgeschoben wird, wobei beim Aufschieben automatisch das Abdichtelement (22b) mit verschoben wird.

11. Verfahren nach einem der vorhergehenden Ansprüche,
wobei das Prüfungsmedium Druckluft ist.

12. Steckervorrichtung, welche zwei Steckverbindungselemente aufweist, nämlich ein Steckerelement (4) sowie ein Gegensteckerelement (6), die in einer Steckrichtung (S) ineinander steckbar sind, wobei eines der Steckverbindungselemente eine Prüföffnung (18) aufweist,
wobei in einer Prüfstellung (P) die Prüföffnung (18) zugänglich ist und eine Strömungsverbindung zwischen der Prüföffnung (18) und dem Innenraum (12) besteht, so dass der Innenraum (12) durch die Prüföffnung (18) während einer Überprüfung mit einem Prüfmedium beaufschlagbar ist und wobei in einer endkonfektionierten Stellung (E) die Strömungsverbindung unterbunden ist, **dadurch gekennzeichnet, dass** ein Abdichtelement (22) angeordnet ist, welches - in Steckrichtung (S) betrachtet - in der Prüfstellung (P) vorder Prüföffnung (18) und in der endkonfektionierten Stellung (E) nach der Prüföffnung (18) angeordnet ist, so dass das Abdichtelement (22a) in der Prüfstellung (P) den Innenraum (12) hinter der Prüföffnung (18) abdichtet und in der endkonfektionierten Stellung (E) den Innenraum zur Prüföffnung (18) abdichtet.

13. Steckervorrichtung nach dem vorhergehenden Anspruch,
wobei das Steckerelement (4) und das Gegensteckerelement (6) zur Verbindung von Hochvoltleitungen ausgebildet sind.

## Claims

1. Method for testing the sealing of an interior (12) of a plug connection (2) to be tested, said plug connection comprising two plug connection elements, namely a plug element (4) and a mating plug element (6), which are plugged into one another in a plug-in direction (S), wherein one of the plug connection elements (4, 6) comprises a test opening (18) to the interior (12), via which the interior (12) is subjected to a test medium for testing the sealing and the test opening (18) is subsequently sealed towards the interior (12), **characterized in that** a sealing element (22) is arranged, which - as viewed in the plug-in direction (S) - in a test position (P) is arranged in front of the test opening (18) and in a assembled position (E) is arranged after the test opening (18) and wherein, in order to seal the test opening (18) towards the interior (12), the sealing element (22a,b) is displaced in the plug-in direction (S) from the test position (P) beyond the test opening (18) into a sealing position in the assembled position (E), so that a previously existing flow connection between the test opening (18) and the interior (12) is suppressed by the sealing element (22a,b), wherein the sealing element (22a) in the test position (P) seals the interior (12) behind the test opening (18) and in the assembled position (E) seals the interior towards the test opening (18).

2. Method according to the preceding claim, wherein
the plug connection (2) comprises a component which is displaced in the plug-in direction (S) during the assembly of the plug connection (2), the sealing element (22a,b) being automatically displaced together with the component.

3. Method according to one of the preceding claims,
wherein the plug element (4) comprises the test opening (18) and for testing the interior (12) is inserted in the test position (P) into the mating plug (6) and then transferred into the assembled position (E) to seal the test opening (18).

4. Method according to the preceding claim,
wherein between the plug element (4) and the mating plug element (6) the sealing element (22a) is arranged, so that the interior (12) is sealed by the sealing element (22a).

5. Method according to one of the preceding claims,
wherein, in order to form the plug connection (2), the plug element (4) is surrounded by the mating plug element (6) and the sealing element (22b) is formed as an annular seal.

6. Method according to one of the preceding claims,
wherein the plug element (4) comprises a latching lug (14) and the mating plug element (6) comprises a latching recess (16), so that in the assembled position (E) the latching lug (14) latches in the latching recess (16).

7. Method according to the preceding claim,
wherein the test opening (18) viewed in the plug-in direction (S) is arranged behind the latching lug (14), so that in the test position (P) the latching recess (16) is arranged above the test opening (18).

8. Method according to one of Claims 1 to 2,
wherein the plug connection element with the test opening (18) comprises a connecting piece (24) with a lead-through (10), through which, in an assembled state, a line (8) into the interior (12) is introduced, and wherein the test opening (18) is formed in the connecting piece (24).

9. Method according to the preceding claim,
wherein the sealing element (22b) is arranged between the connecting piece (24) and the line (8) and is displaced beyond the test opening (18).

10. Method according to the preceding claim, wherein the plug connection (2) further comprises a holding element (26) which is pushed onto the connecting piece (24), the sealing element (22b) being automatically moved along with upon pushing of the holding element.

11. Method according to one of the preceding claims, wherein the test medium is compressed air.

12. Connection device comprising two connection elements, namely a plug element (4) and a mating plug element (6) which can be plugged into one another in a plug-in direction (S), wherein one of the plug elements has a test opening (18),
wherein in a test position (P) the test opening (18) is accessible and there is a flow connection between the test opening (18) and the interior (12), so that the interior (12) via the test opening (18) can be subjected to a test medium during a test, and wherein, in an assembled position (E), the flow connection is suppressed, **characterized in that** a sealing element (22) is arranged, which - as viewed in the plug-in direction (S) - in the test position (P) is arranged in front of the test opening (18) and, in the assembled position (E) is arranged after the test opening (18), so that the sealing element (22a) in the test position (P) seals the interior (12) behind the test opening (18) and in the assembled position (E) seals the interior towards the test opening (18)

13. Connection device according to the preceding claim,
the plug element (4) and the mating plug element (6) being designed for the connection of high-voltage lines.

## Revendications

1. Procédé pour vérifier l'étanchéité d'un intérieur (12) à vérifier d'un ensemble connecteur (2), ledit ensemble connecteur comprenant deux éléments de liaison à enfichage, notamment un élément de connecteur (4) et un élément de connecteur complémentaire (6), qui sont enfichés l'un dans l'autre dans une direction d'enfichage (S), l'un des éléments de liaison à enfichage (4, 6) comprenant une ouverture de test (18) vers l'intérieur (12), par laquelle l'intérieur (12) est soumis à un milieu de test pour vérifier l'étanchéité et l'ouverture de test (18) est ensuite scellée vers l'intérieur (12), **caractérisé en ce qu'**un élément d'étanchéité (22) est disposé qui - vu dans la direction d'insertion (S) - dans une position de test (P) est disposé devant l'ouverture de test (18) et dans une position de montage (E) est disposé après l'ouverture de test (18) et dans lequel, pour assurer l'étanchéité de l'ouverture de test (18) vers l'intérieur (12), l'élément d'étanchéité (22a,b) est déplacé dans la direction d'enfichage (S) de la position de test (P) au-delà de l'ouverture de test (18) à une position d'étanchéité dans la position de montage (E), de sorte qu'une liaison d'écoulement existant précédemment entre l'ouverture de test (18) et l'intérieur (12) est supprimée par l'élément d'étanchéité (22a,b), dans lequel l'élément d'étanchéité (22a) en position de test (P) scelle l'intérieur (12) derrière l'ouverture de test (18) et en position de montage (E) scelle l'intérieur vers l'ouverture de test (18).

2. Procédé selon la revendication précédente, dans lequel l'ensemble connecteur (2) comporte un composant qui est déplacé dans la direction d'enfichage (S) lors de l'assemblage de l'ensemble connecteur (2), l'élément d'étanchéité (22a, b) étant automatiquement déplacé ensemble avec le composant.

3. Procédé selon l'une des revendications précédentes, dans lequel l'élément de connecteur (4) comporte l'ouverture de test (18) et pour vérifier l'intérieur (12) est enfiché dans l'élément de connecteur complémentaire (6) en position de test et puis transféré à la position de montage (E) pour sceller l'ouverture de test (18).

4. Procédé selon la revendication précédente,
dans lequel, entre l'élément de connecteur (4) et l'élément de connecteur complémentaire (6), l'élément d'étanchéité (22a) est disposé de manière à ce que l'intérieur (12) soit scellé par l'élément d'étanchéité (22a).

5. Procédé selon l'une des revendications précédentes,
dans lequel, pour former l'ensemble connecteur (2), l'élément de connecteur (4) est entouré par l'élément de connecteur complémentaire (6) et l'élément d'étanchéité (22b) est formé comme un joint annulaire.

6. Procédé selon l'une des revendications précédentes, l'élément de connecteur (4) comprenant un ergot d'encliquetage (14) et l'élément de connecteur complémentaire (6) comportant un évidement d'encliquetage (16), de sorte qu'en position de montage (E), l'ergot d'encliquetage (14) s'encliquette dans l'évidement d'encliquetage (16).

7. Procédé selon la revendication précédente, l'ouverture de test (18) - vu dans la direction d'insertion (S) - étant disposée derrière l'ergot d'encliquetage (14), de sorte qu'en position de test (P) l'évidement d'encliquetage (16) est disposé au-dessus de l'ouverture de test (18).

8. Procédé selon l'une des revendications 1 à 2,
dans lequel l'élément de liaison à enfichage avec l'ouverture de test (18) comprend une pièce de connexion (24) avec un passage (10) par lequel une conduite (8) est introduite dans l'intérieur (12) dans un état assemblé, et dans lequel l'ouverture de test (18) est formée dans la pièce de connexion (24).

9. Procédé selon la revendication précédente, dans lequel l'élément d'étanchéité (22b) est disposé entre la pièce de connexion (24) et la conduite (8) et est déplacé au-delà de l'ouverture de test (18).

10. Procédé selon la revendication précédente, dans lequel l'ensemble connecteur (2) comprend en outre un élément de maintien (26) qui est enfilé sur la pièce de connexion (24), l'élément d'étanchéité (22b) étant automatiquement déplacé lorsqu'il est enfilé.

11. Procédé selon l'une des revendications précédentes, dans lequel le milieu test est l'air comprimé.

12. Dispositif à fiche, qui comporte deux éléments de connexion, notamment un élément de connecteur (4) et un élément de connexion complémentaire (6) qui peuvent être enfichés l'un dans l'autre dans une direction d'enfichage (S), dans lequel l'un des éléments de liaison à enfichage comprend une ouverture de test (18),
dans lequel, dans une position de test (P), l'ouverture de test (18) est accessible et il existe une liaison d'écoulement entre l'ouverture de test (18) et l'intérieur (12), de sorte que l'intérieur (12) à travers l'ouverture de test (18) pendant un test peut être soumis à un milieu de test et dans lequel, dans une position de montage (E), la liaison d'écoulement est supprimée, **caractérisé en ce qu'**un élément d'étanchéité (22) est disposé, qui - vu dans la direction d'insertion (S) - dans la position de test (P) est disposé devant l'ouverture de test (18) et, en position de montage (E) est disposé après l'ouverture test (18), de sorte que l'élément d'étanchéité (22a) en position de test (P) scelle l'intérieur (12) derrière l'ouverture de test (18) est en position de montage (E) scelle l'intérieur vers l'ouverture de test (18).

13. Dispositif à fiche selon la revendication précédente,
l'élément de connecteur (4) et l'élément de connecteur complémentaire (6) étant conçus pour la connexion de lignes à haute tension.
